# EUROPEAN PATENT SPECIFICATION

(11) **EP 1 352 191 B1**
(45) Date of publication and mention of the grant of the patent: **28.09.2005**
(21) Application number: 02715339.4
(22) Date of filing: 15.01.2002
(51) Int. Cl.: F16L 5/04

(54) **FIRE BLOCK CONDUIT COUPLER**
LEITUNGSKOPPLER MIT FEUERBARRIERE
RACCORD DE CONDUIT COUPE-FEU

(30) Priority: 16.01.2001 CA 2331099
(43) Date of publication of application: 15.10.2003
(73) Proprietor: Harle, Manfred, Brampton, Ontario L6S 4M1 (CA); Didone, Brian M., Georgetown, Ontario K4G 5G6 (CA)
(72) Inventor: DIDONE, Brian, M., Georgetown, Ontario K4G 5G6 (CA)
(74) Representative: Lorenz, Werner
(86) International application number: PCT/CA2002/000026
(87) International publication number: WO 2002/057676

(56) References cited:
- DE-A- 2 713 689
- DE-A- 19 617 017
- DE-U- 29 712 909

## Description

### FIELD OF THE INVENTION

The present invention relates to a plastic conduit coupler with fire block capacity.

### BACKGROUND OF THE INVENTION

It is well known that conduit such as wire conduits, pipe lines etc. provide easy passage for fire from one area of a building to the next. Accordingly, it is extremely important that these conduits include fire blocks.

A typical fire block is one which blocks passage through a pipe line when the pipe line is subjected to excessive heat. Often fire blocks are made from intumescent material, which as is known in the art, expands when subjected to heat, to block fire through a pipe.

An example of a fire block provided in a pipe line is described in United States patent 3,156,263 issued November 10, 1964 to Adelman. According to the Adelman patent, a steel pipe is provided with foam liner which expands or intumesces inwardly when the heat within the pipe reaches an excessively high level.

Another example of a fire block is described in United States patent 4,424,867 issued January 10, 1984 to Mallow. According to the Mallow patent a sleeve of intumescent material is fitted around a pipe or cable where the pipe passes through a partition. In the event of excessive heat, the sleeve intumesces inwardly under the guidance of the sleeve to block the pipe. The intumescent sleeve is surrounded by intumescent wall filler which is totally separate from the sleeve. This wall filler hardens to prevent fire and smoke from moving through the partition around the pipe.

The installation of the Mallow system, including the fitting of the sleeve over the pipe and the filling of the wall with intumescent material around the sleeve is quite labour intensive. Furthermore, the Mallow system necessitates the creation of an otherwise unnecessarily large hole through the partition around the pipe to accommodate the overall system.

United States patent 4,143,671 issued March 13, 1970 to Olson shows a pipe coupler which simply collapses inwardly to provide a pipe block in the event of excessive heat passing along the pipe.

There is no control in the Olson coupler as to the depth penetration of the pipes into the coupler and therefore, there cannot be any exact fitting of the coupler. Furthermore, the Olson coupler does not intumesce and cannot be used as a partition block and may not even be effective as a pipe block if there is excessive collapsing of the block.

United States patent 4,267,853 issued May 19, 1981 to Yamaguchi discloses a metal pipe coupler including a heat expandable rubber inner tube which expands internally of the coupler in the event of excessive heat. There is no external expansion and therefore the Yamaguchi coupler has no benefit as a wall block.

German reference DE29712909 U1 discloses a pipe coupler with intumescent properties. According to this particular reference the coupler has a multi-layer construction in which a foaming agent that provides the intumescening properties is trapped between inner and outer walls of the coupler. The outer wall comprises a metal jacket. The inner wall may be in the form of either a metal foil or even a solid plastic pipe. The inner wall is used in combination with the outer metal jacket to trap the foaming agent within the coupler.

According to this German reference when a situation which requires intumescening of the foam occurs, the foam is prevented from blowing outwardly by the metal jacket. This forces the foam to push on the inner wall of the coupler. The inner wall then collapses inwardly on itself.

The German reference does not show a coupler with an intumescent region which can be made in a single step molding process. Further the German reference does not include intumescent material immediately around the passage through the coupler but rather the intumescent material is separated from the passage by the inner wall of the coupler.

### SUMMARY OF THE PRESENT INVENTION

The present invention provides a conduit coupler which penetrates a fire rated separation in a building e.g., a wall, a floor etc. to couple plastic conduit on either side of the separation. The coupler of the present invention has plastic end regions for an overlapped accurately positioned sealed coupling with the plastic conduit with those end regions being separated by an intermediate region formed by a wall of plastic based intumescent material. This wall of the plastic based intumescent material defines a fluid flow passage through the coupler and has a sufficient thickness of the intumescent material to produce a complete blockage of the passage when the coupler is subjected to conditions which cause an intumescing of the wall forming material of the intermediate region of the coupler.

### BRIEF DESCRIPTION OF THE DRAWINGS

The above as well as other advantages and features of the present invention will be described in greater detail according to the preferred embodiments of the present invention in which;
Figure 1 is an exploded perspective view of a piping system to receive a pipe coupler according to a preferred embodiment of the present invention;
Figure 2 is a sectional view through the pipe coupler of Figure 1;
Figure 3 is an assembled view of the pipe system of Figure 1;
Figure 4 is a view similar to Figure 3 showing the pipe system when subjected to fire;
Figures 5 through 9 are sectional views showing the coupling of plastic conduits using couplers according to different preferred embodiments of the invention.

### DETAILED DESCRIPTION ACCORDING TO THE PREFERRED EMBODIMENTS OF THE PRESENT INVENTION IN WHICH:

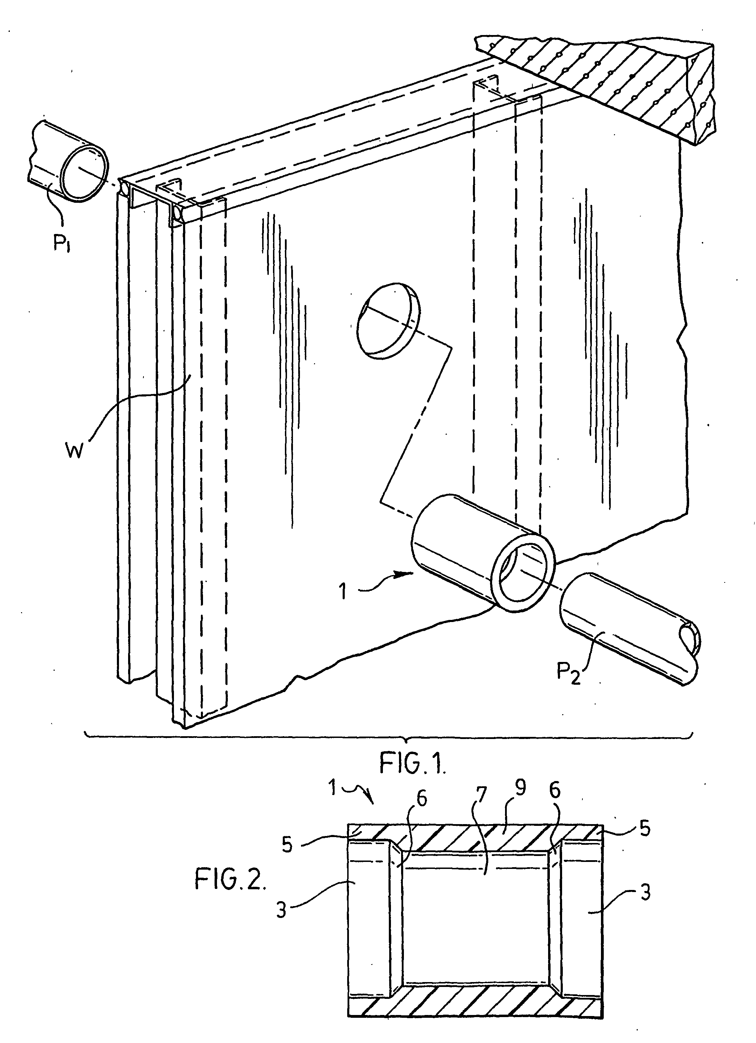

Figure 1 shows a conduit system comprising a pair of pipes P1 and P2 to be coupled by a coupler generally indicated at 1. Coupler 1 joins the pipes where they pass through a partition or wall W.

Figure 2 shows that coupler 1 includes a pair of sockets 3 to opposite ends of the coupler. The sockets are bordered by wall regions 5.

Each of these sockets 3 terminates with a pipe end stop 6 in the form of a shoulder of an internal diameter reduced relative to that of each socket. Located between the two pipe end stops is a central passage 7 through the coupler. Passage 7 is bordered by wall region 9 of the coupler. As seen in the drawings wall region 9 is thicker than wall regions 5.

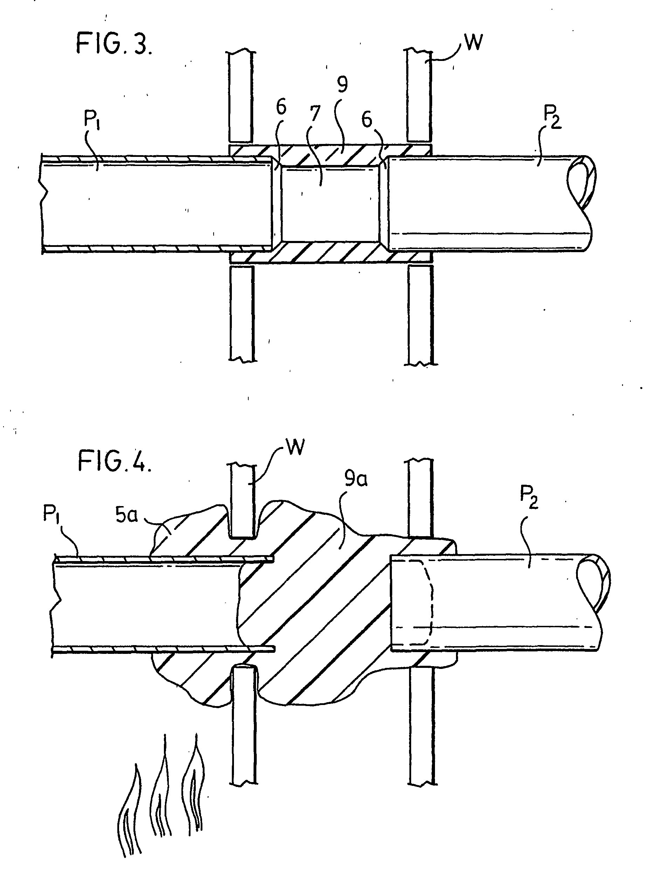

Figure 3 shows that the coupler conforms very closely to the diameter of the opening through wall W.

Pipes P1 and P2 have a standard plastic construction made from material such as PVC which is additionally a preferred constituent of the coupler. In the coupler the PVC provides a carrier for graphite which gives the coupler its intumescent properties.

The benefit of making the coupler of the same material as that used in the pipes, i.e. PVC, is that the pipes can be welded to the coupler using standard solvents. Further both the pipes and the coupler have the same physical characteristics so that all components of the system react in the same manner to outside forces to help the system stay together. In addition there are no contamination problems as there can be when parts of a plastic system are made from different materials.

In order to assemble the pipe system the two pipes are pushed into the sockets until the pipes hit the socket end stops. As noted above known solvents are used to weld the pipes with the coupler to provide a very accurate leak proof joint of the pipe system where is passes through the partition. The partition itself will typically be fire rated.

Figure 4 shows how the pipe coupler reacts when subjected to excessive heat e.g., heat created by a fire or the like. More particularly, it will be seen that the intumescent material making up the side wall regions 5 and 9 of the coupler when subjected to this heat, rapidly expands from its original shape to a much larger mass of material indicated at 9a and 5a in Figure 4. The expansion of the intumescent material is many times its original size and the expansion is in the direction of the source of the heat which will stop the fire before it has a chance to spread, as described immediately below.

Figure 4 shows that the expanded material 9a completely closes down the passage through the coupler. Further the expanded material 5a and 9a completely seal off the passage around the pipe system through the wall W. Accordingly, the intumescent material effectively seals off one room area from the next along all areas internally and externally of the pipe system.

It is to be appreciated that eventually the wall and/or the pipe system may give way under intense heat and fire conditions and that the block is only a temporary measure to allow sufficient time to control the situation.

In the embodiment described immediately above, the coupler is, as earlier noted, made entirely from the PVC and graphite combination. When having this composition the coupler is preferably made in a molding process rather than in an extrusion process as used for making the actual pipes. Such a molding process e.g., injection or compression molding lends itself to the shape of the coupler and also provides controlled static conditions to allow the PVC - graphite combination to set up in a manner to withstand normal impact to which the coupler may be exposed.

From the drawings and description above a number of features of this particular coupler become apparent. For example, it will be seen that the walls defining the sockets are not only thinner, they are also shorter in length than the wall defining the intermediate region of the coupler between the sockets. Again, in this particular coupler design the socket walls are about half the thickness of the wall defining the central fluid flow passage of the coupler. They are also about half the length of the central wall region of the coupler. These proportions result in a very efficient use of the intumescent material which is relatively expensive in comparison to stock PVC. With this efficient use of the material the sockets are sufficiently long to provide an overlapped sealed connection with the two pipes adequate to stand up to forces to which the system would normally encounter without using excess intumescent material at the connections. At the same time the thicker longer wall region of the central flow passage of the coupler includes sufficient intumescent material to completely block off the passage when the material does intumesce.

In contrast to the full intumescent material construction of the coupler of Figures 1 through 4, Figures 5 through 7 show conduit couplers having multiple material construction. In particular, this construction comprises a fluid flow passage defined by a wall of intumescent material and conduit connecting sockets made of a non-intumescing material.

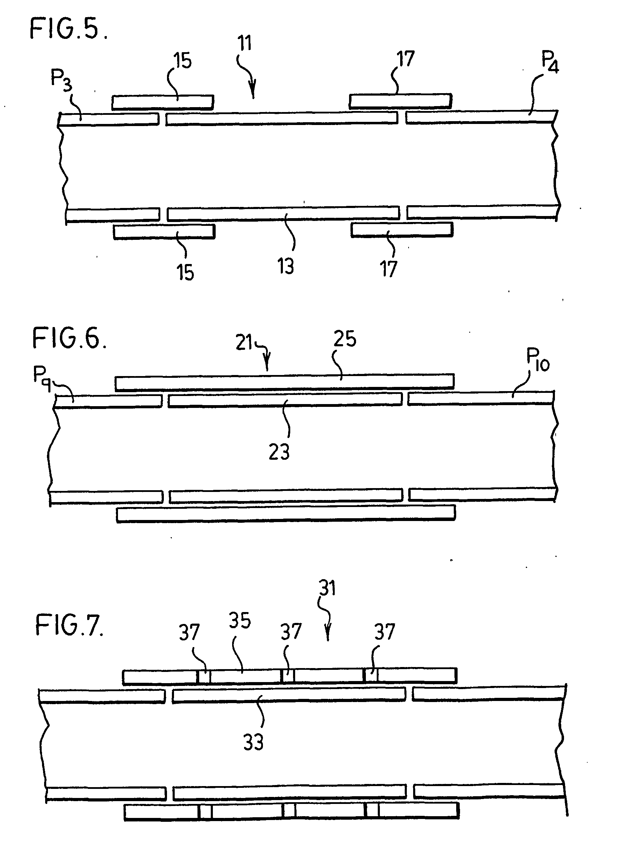

More particularly, Figure 5 shows a conduit coupler generally indicated at 11 which couples pipes P3 and P4. Once again, this coupling would typically be made where the conduit system penetrates a building separation member with the coupler itself being located interiorly of the separation member.

Coupler 11 comprises a tubular member of intumescent material 13 which once again preferably has a PVC and graphite composition. The tubular member 13 is consistent in diameter, particularly in internal diameter, with the two pipes and as such it forms a smooth continuation of the conduit system through the penetrating member. Once again, the amount of material provided in the wall of tubular member 13 is sufficient to cause a complete blockage of the fluid flow passage in the event that the material forming the tubular member does intumesce.

By way of example only the internal diameter of the fluid flow passage may be in the order of between three and five times the thickness of the wall surrounding the flow passage.

Here it should be noted that the material when intumescing expands both internally and externally of the coupler and the external expansion of the intumescent material acts to seal off the area in the penetrating member around the coupler to prevent smoke and/or fire damage from passing from room to room around the coupler in addition to the internal blockage of the coupler.

In the embodiment of Figure 5 a pair of collars 15 and 17 are sleeved over the opposite ends of the tubular intumescent member. They are then sealed as by solvent welding or the like to the tubular member to provide permanent sockets at each end of the coupler. In addition to overlapping the intumescent material, the collars 15 and 17 also leave sufficient room to overlap with and seal against the two pipes P3 and P4. The ends of the two pipes when pushed into the two sockets will abut the opposing ends of the intumescent member 13 to provide the accurate location of the coupler relative to the two pipes.

Once again the two sockets are compatible with the two pipes in as much as they can be made from the same pipe material to produce an extremely efficient solvent welding of the coupler to the pipes.

The embodiment shown in Figure 6 comprises a coupler generally indicated at 21. This coupler includes a single non-intumescent socket forming member 25 which is longer than and sleeved over tubular member 23 formed of intumescent material. The intumescent material therefore becomes a shortened liner for the socket forming member.

As a result of its overlength, the socket forming member extends beyond each end of the intumescent member to enable an overlapped sealed connection with the two pipes P9 and P10 at opposite ends of the coupler.

In this particular embodiment, the intumescent member 23 does not have to be sealed to the non-intumescent outer cover because there is nowhere for fluid to flow other than centrally through the coupler. This is because the sockets are sealed to the two pipes.

Figure 7 shows a coupler generally indicated at 31 which is similar in design to coupler 21 of Figure 6 with the exception that the outer cover 35 of the coupler is provided with wall openings 37. These wall openings facilitate expansion of the intumescent material of the coupler liner 33 outwardly of the coupler. However, they also necessitate sealing of the terminal end of the liner 33 to the outer cover 35. This prevents fluid passing through the coupler from escaping out through the openings 37 in the outer cover sleeved over the intumescent lining.

Unlike the embodiment of Figures 1 through 4 the embodiments of Figures 5 through 7 are not necessarily benefited by production in a molding operation. In these particular embodiments both the tubular intumescent passage forming members and the socket forming members are of a shape which readily enables them to be manufactured in either a molding or an extrusion process. Furthermore, because the sockets which provide the connection for the coupler with the pipes have a non-intumescent construction they can easily be made in an extrusion process and have the sufficient strength and impact resistance to properly secure the coupler with the adjoining pipes.

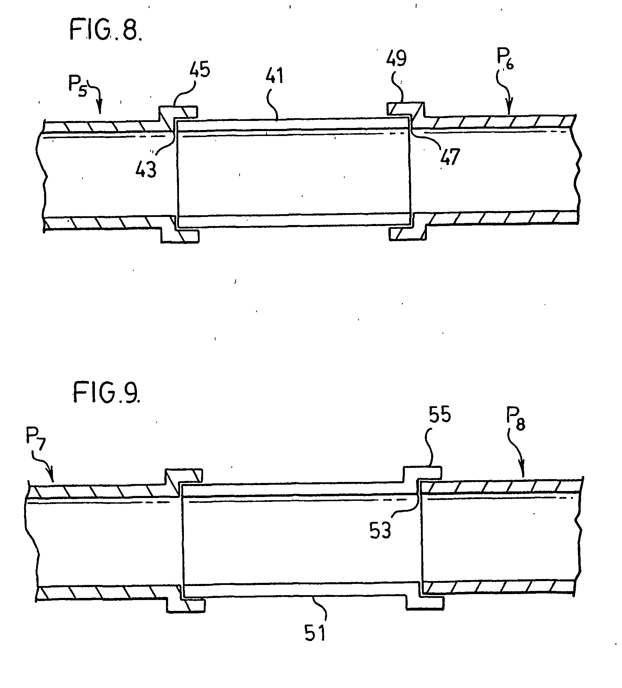

Figures 8 and 9 demonstrate further coupled pipe systems having accurate pipe and coupler positions according to the present invention.

More particularly, Figure 8 shows a piping system comprising pipes P5 and P6 coupled by an intumescent pipe coupler 41. This pipe coupler would once again couple the pipes where they pass through a building separation. It has the same expansion capabilities as earlier described.

In Figure 8 coupler 41 is in the form of a straight sleeve with the end stops 43 and 47 to opposite ends of the coupler being provided by the walls of pipes P7 and P8. The pipes are provided with collars 45 and 49 respectively. These collars overlap the coupler and provide solvent receiving securing areas between the coupler and the pipes.

Figure 9 shows another embodiment of the invention in which pipe P7 is secured through a building separation (not shown) by an intumescent pipe coupler 51 Pipe P7 is identical to pipes P5 and P6, whereas P8 is a straight bodied, non collared pipe. In order to make the coupling with pipe P8, coupler 51 is provided at one end with a collar 55, surrounding pipe P8. The main body of pipe P8 then end stops against the pipe end stop internally of coupler 51.

In the description above, the coupler is used to couple pipes passing through a wall. It is to be understood that the coupler can be used to couple any other type of conduit passing through any other type of building fire and smoke separation.

Although various preferred embodiments of the present invention have been described in detail, it will be appreciated by those skilled in the art that variations may be made without departing from the scope of the appended claims.

## Claims

1. A coupler (1) having end regions (5, 5) made with a plastic material for an overlapped accurately positioned sealed coupling with a plastic conduit (P1, P2) to each end of said coupler, said plastic end regions being separated by an intermediate region (9) defining a fluid flow passage (7) through said coupler, said intermediate region including intumescent material in an amount sufficient to produce a complete blockage of the passage when the coupler is subjected to conditions which cause intumescing of the intumescent material, said coupler being **characterized in that** said intermediate region (9) comprises a solid formulation made from a combination of the intumescent and plastic materials mixed together with one another to form a wall around said passage through said coupler.

2. A coupler as claimed in Claim 1 **characterized in that** said end regions (5, 5) comprise sockets of interior diameter greater than that of said passage (7) through said coupler and further that said coupler has a uniform external diameter lengthwise thereof.

3. A coupler as claimed in Claim 2 **characterized in that** said coupler (1) has a one-piece molded construction with the end regions (5, 5) also being made from the solid formulation of the intumescent and plastic materials.

4. A coupler as claimed in Claim 1 **characterized in that** the intumescent material of said intermediate region (9) is exposed directly to said interior passage (7) and is also exposed exteriorly of said coupler whereby said intumescent material is free to expand both inwardly and outwardly of said coupler.

5. A coupler as claimed in Claim 1 **characterized in that** each of said sockets (5) has a wall thickness of about one half the wall thickness of said intermediate region (9) of said coupler.

6. A coupler as claimed in Claim 2 **characterized by** a pipe end stop (6) to each end of said passage (7) internally of said coupler.

7. A coupler (11) as claimed in Claim 1, **characterized in that** said end regions (15, 17) are made separately from and telescopically fitted over and sealed to opposite ends of said intermediate region (13) of said coupler, the opposite ends of the intermediate region presenting surfaces which provide pipe end stops internally of said coupler.

8. A coupler as claimed in Claim 7 **characterized in that** said intermediate region (13) and said end regions (15, 17) can be made in an extrusion process.

9. A coupler (31) as claimed in Claim 1, **characterized in that** said intermediate region comprises a wall (33) around said passage through said coupler, a cover (35) sleeved over said wall (33) around said passage through said coupler, said cover (35) being elongated relative to said wall (33) such that opposite ends of said cover protrude beyond said wall to provide said end regions of said coupler.

10. A coupler as claimed in Claim 9 **characterized in that** said that cover (35) includes wall openings (37) to facilitate expansion of the intumescent material outwardly through said cover (35) of the coupler.

## Patentansprüche

1. Koppler (1), welcher Endbereiche (5,5) aufweist, die aus einem Kunststoffmaterial hergestellt sind, für eine überlappende, genau positionierte, abgedichtete Kopplung mit einer Kunststoffleitung (P1, P2) an jedem Ende des Kopplers, wobei die Kunststoffendbereiche durch einen Zwischenbereich (9) voneinander getrennt sind, welcher einen Strömungsdurchgang (7) für Fluid durch den Koppler bildet, wobei der Zwischenbereich Schaum bildendes Material in einer Menge aufweist, welche ausreichend ist, um eine komplette Blockierung des Durchgangs zu erzeugen, wenn der Koppler solchen Bedingungen ausgesetzt ist, welche eine Schaumbildung des Schaum bildenden Materials bewirken, wobei der Koppler **dadurch gekennzeichnet ist, dass** der Zwischenbereich (9) eine feste Formulierung aufweist, welche aus einer Kombination der miteinander gemischten Schaum bildenden und Kunststoffmaterialien hergestellt ist, um eine Wand um den Durchgang durch den Koppler zu bilden.

2. Koppler nach Anspruch 1,
**dadurch gekennzeichnet, dass**
die Endbereiche (5,5) Rohransätze aufweisen, deren innerer Durchmesser größer als derjenige des Durchgangs (7) durch den Koppler ist, und dass der Koppler über seine Länge einen gleichförmigen äußeren Durchmesser aufweist.

3. Koppler nach Anspruch 2,
**dadurch gekennzeichnet, dass**
der Koppler (1) eine einstückige gegossene Konstruktion aufweist, wobei die Endbereiche (5,5) auch aus der festen Formulierung der Schaum bildenden und Kunststoffmaterialien hergestellt ist.

4. Koppler nach Anspruch 1,
**dadurch gekennzeichnet, dass**
das Schaum bildende Material des Zwischenbereichs (9) direkt dem inneren Durchgang (7) ausgesetzt ist und ebenfalls außenseitig an dem Koppler angeordnet ist, wodurch das Schaum bildende Material frei ist, sich sowohl nach innen als auch nach außerhalb des Kopplers auszudehnen.

5. Koppler nach Anspruch 1,
**dadurch gekennzeichnet , dass**
jeder der Rohransätze (5) eine Wanddicke von ungefähr der Hälfte der Wanddicke des Zwischenbereichs (9) des Kopplers aufweist.

6. Koppler nach Anspruch 2,
**gekennzeichnet durch**
einen Rohrendanschlag (6) an jedem Ende des Durchgangs (7) innerhalb des Kopplers.

7. Koppler (11) nach Anspruch 1,
**dadurch gekennzeichnet, dass**
die Endbereiche (15,17) separat von dem Zwischenbereich (13) des Kopplers hergestellt sind, über denselben schiebbar sind und an gegenüberliegenden Enden desselben abgedichtet sind, wobei die gegenüberliegenden Enden des Zwischenbereichs Flächen aufweisen, welche Rohrendanschläge innerhalb des Kopplers bilden.

8. Koppler nach Anspruch 7,
**dadurch gekennzeichnet, dass**
der Zwischenbereich (13) und die Endbereiche (15, 17) in einem Extrusionsverfahren herstellbar sind.

9. Koppler nach Anspruch 1,
**dadurch gekennzeichnet, dass**
der Zwischenbereich eine Wand (33) um den Durchgang durch den Koppler und eine über die Wand (33) um den Durchgang durch den Koppler geschobene Abdeckung (35) aufweist, wobei die Abdeckung (35) bezüglich der Wand (33) verlängert ist, so dass gegenüberliegende Enden der Abdeckung über die Wand hinaus hervorstehen, um die Endbereiche des Kopplers zu bilden.

10. Koppler nach Anspruch 9,
**dadurch gekennzeichnet, dass**
die Abdeckung (35) Wandöffnungen (37) aufweist, um die Ausdehnung des Schaum bildenden Materials nach außen durch die Abdeckung (35) des Kopplers zu erleichtern.

## Revendications

1. Raccord (1) ayant des zones d'extrémité (5, 5) réalisées en un matériau plastique pour un couplage hermétique par recouvrement positionné avec précision avec un conduit plastique (P1, P2) à chaque extrémité dudit raccord, lesdites zones d'extrémité en plastique étant séparées par une zone intermédiaire (9) définissant un passage (7) pour un fluide à travers ledit raccord, ladite zone intermédiaire comportant un matériau intumescent dans une quantité suffisante pour produire un blocage total du passage lorsque le raccord est soumis à des conditions qui provoquent l'intumescence du matériau intumescent, ledit raccord étant **caractérisé en ce que** ladite zone intermédiaire (9) comprend une formulation solide obtenue à partir d'une combinaison des matériaux plastique et intumescent mélangés ensemble l'un avec l'autre pour former une paroi autour dudit passage à travers ledit raccord.

2. Raccord tel que revendiqué dans la revendication 1, **caractérisé en ce que** lesdites zones d'extrémité (5, 5) comprennent des emboîtures de diamètre intérieur plus grand que celui dudit passage (7) à travers ledit raccord et, en outre, **en ce que** ledit raccord a un diamètre extérieur uniforme sur sa longueur.

3. Raccord tel que revendiqué dans la revendication 2, **caractérisé en ce que** ledit raccord (1) est réalisé en une pièce par moulage, les zones d'extrémité (5, 5) étant également réalisées à partir de la formulation solide des matériaux plastique et intumescent.

4. Raccord tel que revendiqué dans la revendication 1, **caractérisé en ce que** le matériau intumescent de ladite zone intermédiaire (9) est en contact avec ledit passage intérieur (7) et est également en contact extérieurement avec ledit raccord, ledit matériau intumescent étant ainsi libre pour se dilater à l'intérieur et à l'extérieur dudit raccord.

5. Raccord tel que revendiqué dans la revendication 1, **caractérisé en ce que** chacune desdites emboîtures (5) a une épaisseur de paroi égale à environ la moitié de l'épaisseur de la paroi de ladite zone intermédiaire (9) dudit raccord.

6. Raccord tel que revendiqué dans la revendication 2, **caractérisé par le fait qu'**il comporte une butée d'extrémité du tube (6) à chaque extrémité dudit passage (7) à l'intérieur dudit raccord.

7. Raccord (11) tel que revendiqué dans la revendication 1, **caractérisé en ce que** lesdites zones d'extrémité (15, 17) sont réalisées séparément de ladite zone intermédiaire (13) dudit raccord, sont ajustées de façon télescopique sur cette zone et scellées aux extrémités opposées de ladite zone, les extrémités opposées de la zone intermédiaire présentant des surfaces qui forment les butées d'extrémité du tube à l'intérieur dudit raccord.

8. Raccord tel que revendiqué dans la revendication 7, **caractérisé en ce que** ladite zone intermédiaire (13) et lesdites zones d'extrémité (15, 17) peuvent être obtenues par un procédé d'extrusion.

9. Raccord (31) tel que revendiqué dans la revendication 1, **caractérisé en ce que** ladite zone intermédiaire comprend une paroi (33) autour dudit passage à travers ledit raccord, un couvercle (35) en forme de manchon sur ladite paroi (33) autour dudit passage à travers ledit raccord, ledit couvercle (35) étant prolongé par rapport à ladite paroi (33) de façon que les extrémités opposées dudit couvercle dépassent au-delà de ladite paroi pour former lesdites zones d'extrémité dudit raccord.

10. Raccord tel que revendiqué dans la revendication 9, **caractérisé en ce que** ledit couvercle (35) comporte des ouvertures (37) dans la paroi pour faciliter l'expansion du matériau intumescent vers l'extérieur à travers ledit couvercle (35) du raccord.
